(19) Europäisches Patentamt
European Patent Office
Office européen des brevets

(11) EP 4 425 384 A1

(12) EUROPEAN PATENT APPLICATION

(43) Date of publication:
04.09.2024 Bulletin 2024/36

(21) Application number: 23159239.5

(22) Date of filing: 28.02.2023

(51) International Patent Classification (IPC):
G06N 3/082 (2023.01)    G06N 3/045 (2023.01)
G06N 3/047 (2023.01)    G06N 3/0475 (2023.01)
G06N 3/088 (2023.01)

(52) Cooperative Patent Classification (CPC):
G06N 3/045; G06N 3/044; G06N 3/047;
G06N 3/0475; G06N 3/082; G06N 3/088;
G06N 3/096

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: FUJITSU LIMITED
Kawasaki-shi, Kanagawa 211-8588 (JP)

(72) Inventor: MAKARIOU, Savvas
London, W2 1SY (GB)

(74) Representative: Haseltine Lake Kempner LLP
Cheapside House
138 Cheapside
London EC2V 6BJ (GB)

(54) **TRAINING DEEP BELIEF NETWORKS**

(57)    A computer-implemented method comprising: training a first deep belief network, DBN, using training data; adding at least one neuron to the first DBN to generate a second DBN; assigning weights to neurons in the second DBN according to weights of neurons in the trained first DBN; and training the second DBN using the training data.

FIGURE 2

**Description**

The present invention relates to training deep belief networks (DBNs), and in particular to a computer-implemented method, a computer program, and an information programming apparatus.

Deep Belief Networks (DBNs) were invented as a solution for the problems encountered when using traditional neural networks - in particular when training deep layered networks, such as slow learning, becoming stuck in local minima due to poor parameter selection, and requiring a lot of training datasets. DBNs may be hardware expensive and time-consuming, for example to perform classification on. There may also be a big data requirement which may become more restrictive when human participants will be the ones providing the data.

In light of the above, a method for training DBNs is desired.

According to an embodiment of a first aspect there is disclosed herein a computer-implemented method comprising: training a first deep belief network, DBN, using training data (to generate a trained first DBN); adding at least one neuron to (a copy of) the (untrained) first DBN (or, the first DBN without neuron weights) to generate a second DBN (which is expanded compared to the first DBN); assigning weights to neurons in the second DBN according to weights of (corresponding) neurons in the trained first DBN (to generate a partially-trained second DBN); and training the (partially-trained) second DBN using the training data.

According to an embodiment of a second aspect there is disclosed herein a computer-implemented method comprising: training a first deep belief network, DBN, using training data (to generate a trained first DBN); and iterating an expansion-training process, the expansion-training process comprising: adding at least one neuron to (a copy of) the (untrained) first DBN (or, the first DBN without neuron weights) to generate a second DBN (which is expanded compared to the first DBN); assigning weights to neurons in the second DBN according to weights of (corresponding) neurons in the trained first DBN (to generate a partially-trained second DBN); and training the (partially-trained) second DBN using the training data, wherein the (untrained) first DBN of each (subsequent) iteration is the (trained) second DBN of the previous iteration (or, the iteration (directly) preceding the said subsequent iteration).

The training of the first DBN may comprise using contrastive divergence gradient approximation.

The training of the first DBN may comprise training the first DBN for a predefined/particular/set number of epochs.

The training of the first DBN may comprise training the first DBN for n epochs, where n is an integer greater than (or equal to) 1.

The training of the first DBN may comprise training the first DBN for a predefined/particular/set amount of time.

The computer-implemented method may further comprise computing a reconstruction error after each (or a (predetermined/set) number of) training epoch when training the first DBN.

The computer-implemented method may further comprise computing a reconstruction error at a time interval or after a (set/predetermined) amount of time when training the first DBN.

The computer-implemented method may further comprise ending the training of the first DBN (or ending the computer-implemented method/expansion-training process) after an epoch if a (an absolute) difference between the reconstruction error after that epoch and the reconstruction error after the previous epoch is less than a threshold value.

Adding at least one neuron to (the copy of) the (untrained) first DBN may comprise adding at least one neuron to (the copy of) the (untrained) first DBN (to expand the width of the network/(the copy of) the (untrained) first DBN) and/or (then) adding at least one layer of neurons to (the copy of) the (untrained) first DBN to expand the depth of the network/(the copy of) the (untrained) first DBN.

Adding at least one neuron to (the copy of) the (untrained) first DBN may comprise adding at least one neuron to at least one layer of the (the copy of) the (untrained) first DBN (to expand the width of the network/(the copy of) the (untrained) first DBN) and/or (then) adding at least one layer of neurons to (the copy of) the (untrained) first DBN to expand the depth of the network/(the copy of) the (untrained) first DBN.

Adding at least one neuron to (the copy of) the (untrained) first DBN may comprise adding at least one neuron to a layer of (the copy of) the (untrained) first DBN (to expand the width of the network/(the copy of) the (untrained) first DBN).

Adding at least one neuron to (the copy of) the (untrained) first DBN may comprise adding a plurality of neurons to (the copy of) the (untrained) first DBN.

Adding at least one neuron to (the copy of) the (untrained) first DBN may comprise adding at least one neuron to each layer of (the copy of) the (untrained) first DBN (to expand the width of the network/(the copy of) the (untrained) first DBN) and optionally adding at least one layer of neurons to (the copy of) the (untrained) first DBN (to expand the depth of the network/(the copy of) the (untrained) first DBN).

Adding at least one neuron to (the copy of) the (untrained) first DBN may comprise adding at least one layer of neurons to (the copy of) the (untrained) first DBN (to expand the depth of the network/(the copy of) the (untrained) first DBN).

Assigning weights to the neurons in the second DBN according to the weights of (corresponding) neurons in the trained first DBN may comprise, for the neurons in the second DBN with corresponding neurons in the trained first DBN, assigning to each (said) neuron (in the second DBN) the weight of the corresponding neuron in the trained first DBN.

Assigning weights to the neurons in the second DBN according to the weights of (corresponding) neurons in the trained first DBN may comprise, for the neurons in the second DBN without corresponding neurons in the trained first DBN (or, for the newly added neurons in the second DBN), assigning to each (said) neuron (in the second DBN) the weight of a neuron (randomly) sampled from the trained first DBN.

Assigning weights to the neurons in the second DBN may comprise, if the same weight is sampled from the trained first DBN a threshold number of times or more, adjusting the weight by a replication factor before assigning the weight to one of the neurons in the second DBN for at least one of the neurons.

The training of the second DBN may comprise using contrastive divergence gradient approximation.

The training of the second DBN may comprise training the second DBN for a predefined/particular/set number of epochs.

The training of the second DBN may comprise training the second DBN for m epochs, where m is an integer greater than (or equal to) 1.

The training of the second DBN may comprise training the second DBN for a predefined/particular/set amount of time.

The computer-implemented method may further comprise computing a reconstruction error after each (or a (set/predetermined) number of) training epoch when training the second DBN.

The computer-implemented method may further comprise computing a reconstruction error at a time interval or after a (set/predetermined) amount of time when training the second DBN.

The computer-implemented method may further comprise ending the training of the second DBN after an epoch if a (an absolute) difference between the reconstruction error after that epoch and the reconstruction error after the previous epoch is less than a (second) threshold value.

The (second) threshold value may be a stopping criterion.

The computer-implemented method may further comprise: adding at least one neuron to (a copy of) the (untrained) second DBN (or, the second DBN without neuron weights) to generate a third DBN (which is expanded compared to the second DBN); assigning weights to neurons in the third DBN according to weights of (corresponding) neurons in the trained second DBN (to generate a partially-trained third DBN); and training the (partially-trained) third DBN using the training data.

Features of adding the at least one neuron to the copy of the untrained first DBN may apply to adding at least one neuron to the copy of the untrained second DBN.

Features of assigning weights to the neurons in the second DBN according to the weights of the neurons in the trained first DBN may apply to assigning weights to the neurons in the third DBN according to the weights of the neurons in the trained second DBN.

Features of training the (partially-trained) second DBN may apply to training the (partially-trained) third DBN.

The computer-implemented method may further comprise iterating the adding of at least one neuron to (the copy of) the (untrained) first DBN, the assigning of weights to neurons in the second DBN, and the training of the second DBN, wherein the first DBN of each (subsequent) iteration is the (trained) second DBN of the previous iteration (or, the iteration (directly) preceding the said subsequent iteration).

The computer-implemented method may further comprise iterating the training of the first DBN, the adding of at least one neuron to (the copy of) the (untrained) first DBN, and the assigning of weights to neurons in the second DBN, wherein the (trained) second DBN of each iteration is the first DBN of the following iteration.

The adding of at least one neuron to (the copy of) the (untrained) first DBN, the assigning of weights to neurons in the second DBN, and the training of the second DBN may be considered part of an expansion-training process, and the method may comprise iterating the expansion-training process, wherein the first DBN of each (subsequent) iteration is the (trained) second DBN of the previous iteration (or, the iteration (directly) preceding the said subsequent iteration).

Training of the second DBN may comprise training the second DBN for a predefined/particular/set number of epochs or for a predefined/particular/set amount of time.

The computer-implemented method may further comprise computing a reconstruction error after each training epoch when training the second DBN.

The computer-implemented method may further comprise iterating the adding of at least one neuron to (the copy of) the (untrained) first DBN, the assigning of weights to neurons in the second DBN, and the training of the second DBN until the a (an absolute) difference between the reconstruction error after that epoch and the reconstruction error after the previous epoch is less than a (second) threshold value.

The untrained first DBN or the copy of the untrained first DBN or (the copy of) the first DBN without weights may be referred to as a first version of the first DBN. The trained first DBN may be referred to as a second version of the first DBN. The untrained second DBN may be referred to as a first version of the second DBN. The trained second DBN may be referred to as a second version of the second DBN.

The computer-implemented method may further comprise outputting the (trained) second DBN (after training) as an output DBN.

The trained second DBN (the second DBN after training)/the output DBN may be for video processing.

The trained second DBN (the second DBN after training)/the output DBN may be for object detection/tracking in videos/video data.

The trained second DBN (the second DBN after training)/the output DBN may be configured to receive as input data video data and may be configured to detect/track at least one object in the video data (and wherein the training data is video data).

The trained second DBN (the second DBN after training)/the output DBN may be for quantifying (an individual's/person's) exposure to the/their environment.

The trained second DBN (the second DBN after training)/the output DBN may be for quantifying (an individual's/person's) exposure to the/their environment based on sensor data including any of: air pollution; particulate matter concentration; (PM1; PM2.5; PM10;) oxidised gas concentration; reduced gas concentration; NH3 concentration; noise level (in decibels); and people count in the vicinity (of the individual/person).

Trained second DBN (the second DBN after training)/the output DBN may be for classifying a wellbeing state of an individual/person based on sensor data including any of: air pollution; particulate matter concentration; (PM 1; PM2.5; PM 10;) oxidised gas concentration; reduced gas concentration; NH3 concentration; noise level (in decibels); and people count in the vicinity (of the individual/person); electrodermal activity; heart rate; heart rate variability; body temperature; blood volume pulse; body movement (via an accelerometer).

Training the second/first DBN may comprise training the second/first DBN to classify a wellbeing state based on the training data (which is sensor data as defined above) according to a self-reported (by the individual/person) wellbeing state as ground truth data.

The sensor data (electrodermal activity; heart rate; heart rate variability; body temperature; blood volume pulse) may be obtained from at least one sensor attached to the body of the person/individual.

The trained second DBN (the second DBN after training)/the output DBN may be for estimating/predicting pollution level(s) in an environment based on data from sensors.

The computer-implemented method may further comprise using the trained second DBN (the second DBN after training)/the output DBN for video processing.

The computer-implemented method may further comprise using the trained second DBN (the second DBN after training)/the output DBN for object detection/tracking in videos/video data (to detect/track at least one object in a video/video data).

The computer-implemented method may further comprise outputting an object detection/tracking result. The result may comprise a determination of whether an object is present in the video and/or coordinates representing the location of the object in the video over time.

The computer-implemented method may further comprise using the trained second DBN (the second DBN after training)/the output DBN is to quantify (an individual's/person's) exposure to the/their environment.

The computer-implemented method may further comprise using the trained second DBN (the second DBN after training)/the output DBN to quantify (an individual's/person's) exposure to the/their environment based on sensor data including any of: air pollution; particulate matter concentration; (PM1; PM2.5; PM10;) oxidised gas concentration; reduced gas concentration; NH3 concentration; noise level (in decibels); and people count in the vicinity (of the individual/person).

The computer-implemented method may further comprise using the trained second DBN (the second DBN after training)/the output DBN to classify a wellbeing state of an individual/person based on sensor data including any of: air pollution; particulate matter concentration; (PM1; PM2.5; PM10;) oxidised gas concentration; reduced gas concentration; NH3 concentration; noise level (in decibels); and people count in the vicinity (of the individual/person); electrodermal activity; heart rate; heart rate variability; body temperature; blood volume pulse; body movement (via an accelerometer).

The computer-implemented method may further comprise outputting a wellbeing score/result based on the classification according to the sensor data.

The computer-implemented method may further comprise using the trained second DBN (the second DBN after training)/the output DBN to estimate/predict pollution level(s) in an environment based on data from sensors.

The computer-implemented method may further comprise outputting a pollution level prediction result.

The method may be implemented on heterogeneous hardware with a plurality of processors operating in parallel.

The computer-implemented method may comprise training the first DBN on/using a first processor and training the second DBN on/using a second processor.

The second processor may be larger and/or has more RAM/memory and/or may be more powerful than the first processor.

The method (or the expansion-training process) may be implemented on/using a series of processors, and the method may comprise, on/for each successive iteration, using a larger processor from the series of processors than the processor used in/for the previous iteration.

The method may comprise training a plurality of DBNs (using the expansion-training process) on/using the series of processors, and start times of the training (expansion-training process) for each DBN to be trained may be staggered so that the processors of the series of processors operate in parallel.

The first and second DBNs may be primary first and second DBNs, and the method may comprise training a secondary DBN according to any methods specified above.

The method may comprise training the primary first DBN on/using a first processor and simultaneously training a secondary second DBN on/using a second processor. The method may comprise training the primary second DBN on/using the second processor and simultaneously training a secondary first DBN on/using the first processor.

The second processor may be larger and/or may have more RAM/memory and/or may be more powerful than the first processor.

The training (the expansion-training process) of the (different or "primary and secondary") DBNs may use different training data.

According to an embodiment of a third aspect there is disclosed herein a computer program (comprising instructions) which, when run (or, executed) on a computer, causes the computer to carry out a method comprising: training a first deep belief network, DBN, using training data (to generate a trained first DBN); adding at least one neuron to (a copy of) the (untrained) first DBN (or, the first DBN without neuron weights) to generate a second DBN (which is expanded compared to the first DBN); assigning weights to neurons in the second DBN according to weights of (corresponding) neurons in the trained first DBN (to generate a partially-trained second DBN); and training the (partially-trained) second DBN using the training data.

According to an embodiment of a fourth aspect there is disclosed herein an information processing apparatus comprising a memory and at least one processor connected to the memory, wherein the at least one processor is configured to: train a first deep belief network, DBN, using training data (to generate a trained first DBN); add at least one neuron to (a copy of) the (untrained) first DBN (or, the first DBN without neuron weights) to generate a second DBN (which is expanded compared to the first DBN); assign weights to neurons in the second DBN according to weights of (corresponding) neurons in the trained first DBN (to generate a partially-trained second DBN); and train the (partially-trained) second DBN using the training data.

The apparatus may comprise heterogeneous hardware with a plurality of processors operating in parallel.

The at least one processor may comprise a plurality of heterogeneous processors operating in parallel.

The at least one processor may comprise a first processor configured to train the first DBN and a second processor configured to train the second DBN.

The second processor may be larger and/or have more RAM/memory and/or may be more powerful than the first processor.

The at least one processor may comprise a series of processors and, on/for each successive iteration, a larger processor from the series of processors than the processor used in/for the previous iteration may be configured to train the first DBN of that iteration.

The at least one processor/series of processors may be configured to train a plurality of DBNs (using the expansion-training process), and start times of the training (expansion-training process) for each DBN to be trained may be staggered so that the processors of the series of processors operate in parallel.

The first and second DBNs may be primary first and second DBNs, and the at least one processor may be configured to train a secondary DBN as claimed in any of the preceding claims.

The at least one processors may comprise first and second processors. The first processor may be configured to train the primary first DBN and the second processor may be configured, simultaneously, to train a secondary second DBN. The first processor may be configured to train a secondary first DBN and the second processor may be configured, simultaneously, to train the primary second DBN.

The second processor may be larger and/or have more RAM/memory and/or may be more powerful than the first processor.

Features relating to any aspect/embodiment may be applied to any other aspect/embodiment.

Reference will now be made, by way of example, to the accompanying drawings, in which:

Figure 1 is a diagram useful for understanding zero masking;
Figure 2 is a diagram useful for understanding embodiments;
Figure 3 is a diagram illustrating a method;
Figure 4 is a diagram illustrating a method;
Figure 5 is a diagram useful for understanding embodiments; and
Figure 6 is a diagram illustrating an apparatus.

Definitions of terms

Deep Belief Networks - In machine learning, a deep belief network (DBN) is a generative graphical model, or alternatively a class of deep neural network, composed of multiple layers of latent variables ("hidden units"), with connections between the layers but not between units within each layer. (https://en.wikipedia.org/wiki/Deep_belief network)

Restricted Boltzmann Machine - A restricted Boltzmann machine (RBM) is a generative stochastic artificial neural network that can learn a probability distribution over its set of inputs (https://en.wikipedia.org/wiki/Restricted_Boltzmann_machine)

Drop-out - Dropout is a regularization method that approximates training a large number of neural networks with different architectures in parallel. (https://machinelearningmastery.com/dropout-for-regularizing-deep-neural-networks/)

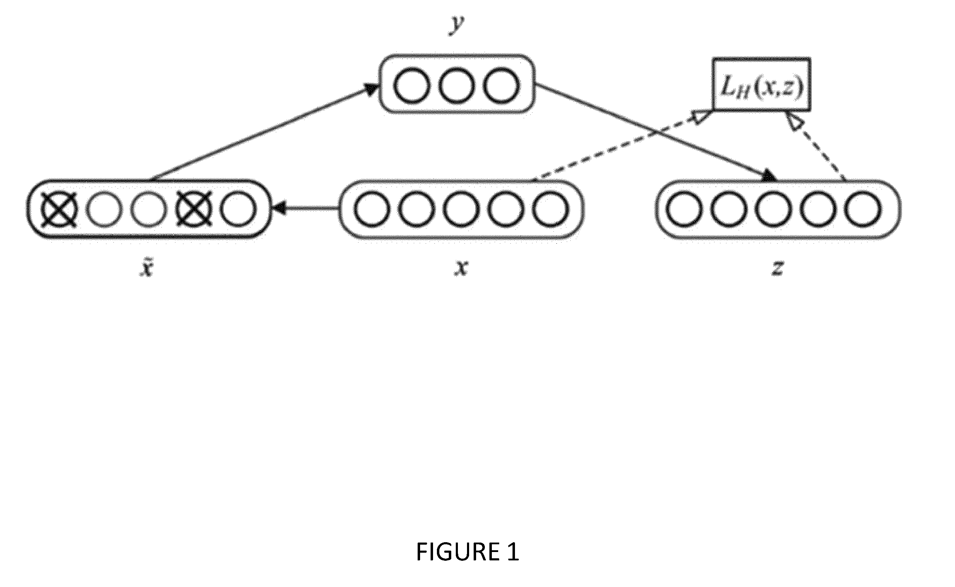

Zero Masking - The principle of the zero-masking strategy is to reconstruct the initial input with the corrupted input, which is beneficial to learn more robust features. To be specific, the value of some input units will be set to 0 with a probability q. Figure 1 may be useful for understanding zero masking..

(https://towardsdatascience.com/how-does-masking-work-in-an-rnn-and-variants-and-why-537bf63c306d)

Reconstruction Error - The general definition of the reconstruction error would be the distance between the original data point and its projection onto a lower-dimensional subspace (its 'estimate'). (https://idswater.com/2021/01/25/what-is-reconstruction-error-in-autoencoder/)

As mentioned above, Deep Belief Networks (DBNs) were invented as a solution for the problems encountered when using traditional neural networks, in particular when training deep layered networks, such as slow learning, becoming stuck in local minima due to poor parameter selection, and requiring a lot of training datasets.

DBNs were initially introduced in "An empirical evaluation of deep architectures on problems with many factors of variation" (https://www.researchgate.net/publication/221345414_An_empirical_evaluation_of_de ep architectures on_problems with_many_factors_of variation) as probabilistic generative models to provide an alternative to the discriminative nature of traditional neural nets.

Generative models provide a joint probability distribution over input data and labels, facilitating the estimation of both $P(x|y)$ and $P(y|x)$, while discriminative models only use the latter model $P(y|x)$. DBNs consist of several layers of neural networks, also known as "Boltzmann Machines". DBNs can also be explained as a stack of restricted Boltzmann Machines. Each layer of Restricted Boltzmann Machine (RBM) interconnects with previous and ensuing layers. This means nodes of a single layer will not communicate with each other horizontally.

Boltzmann Machine

The Boltzmann Machine is an integral part of mechanics and statistics and may, for example, aid in understanding the impact of parameters like Temperature and Entropy in the quantum states in the domain of Thermodynamics. Almost all other similar machines use Stochastic Gradient Descent for the patterns to be learned and optimized but a Boltzmann Machine learns patterns without Stochastic Gradient Descent. There is not a typical 1 or 0 type output when using a Boltzmann Machine but still it is possible to determine the patterns.

Restricted Boltzmann Machine

Restricted Boltzmann Machines (RBMs) can be considered as a binary version of factor analysis. Instead of having many factors, a binary variable will determine the network output. The widespread RBNs allow for more efficient training of the generative weights of their hidden units. These hidden units are trained to capture higher-order data correlations that are observed in the visible units.

The generative weights are obtained using an unsupervised greedy layer-by-layer method, enabled by contrastive divergence (https://www.cs.toronto.edu/~hinton/absps/tr00-004.pdf). The RBN training process, known as Gibbs sampling, starts by presenting a vector, v, to the visible units that forward values to the hidden units. In the reverse direction, the visible unit inputs are stochastically found to reconstruct the original input. Finally, these new visible neuron activations are forwarded so that single-step reconstruction hidden unit activations, h, can be attained.

An RBM is like a BM with a small difference. In a Restricted Boltzmann Machine, there are no connections between nodes within a group i.e. visible and hidden. This makes it easier to be implemented and trained.

There have been proposals to improve the robustness of DBNs with the use of dropout and zero masking techniques. Nonetheless, issues may still persist in terms of time and resources used in training DBNs. Not only are there expensive hardware, data and time requirements, but also the performance of the trained DBN may be lacking.

To delve deeper into the problems and inefficiencies during the training phase of a DBN, the steps and their issues are listed below:

- Initially, determining the structure and size of a DBN (number of neurons in each layer and number of layers) requires experience. If a higher number is used, the computational costs may increase without adding much accuracy.
- A more complex structure can provide an improved ability to solve complex problems. Though during training of a more complex structure a longer training time is required and sometimes lower accuracy is achieved due to poor implementation.

- Researchers generally tend to optimise the parameters of the DBN based on experience, which may be time consuming.
- To optimise training accuracy, data overfitting, and training time/resources, the best network structure should be obtained with minimal efforts.

Dropout technique and zero-masking strategies are usually adopted to enhance the robustness of DBNs. Training of DBNs is expensive and time consuming due for example to bottlenecks occurring when using multiple layers of input data and multiple layers of RBMs. This occurs because, as described above, a greedy learning algorithm is first used to train top-down weights, layer by layer and then Gibbs sampling is used to extract the output layer. A DBN necessitates training each RBM layer. In the scenarios where input data consists of multiple types and layers, for example (such as environmental and physiological), in addition to multiple layers of RBMs for example, a bottleneck may occur. For example, a bottleneck may occur with more than 3 types of input data and more than 5 layers of RBMs.

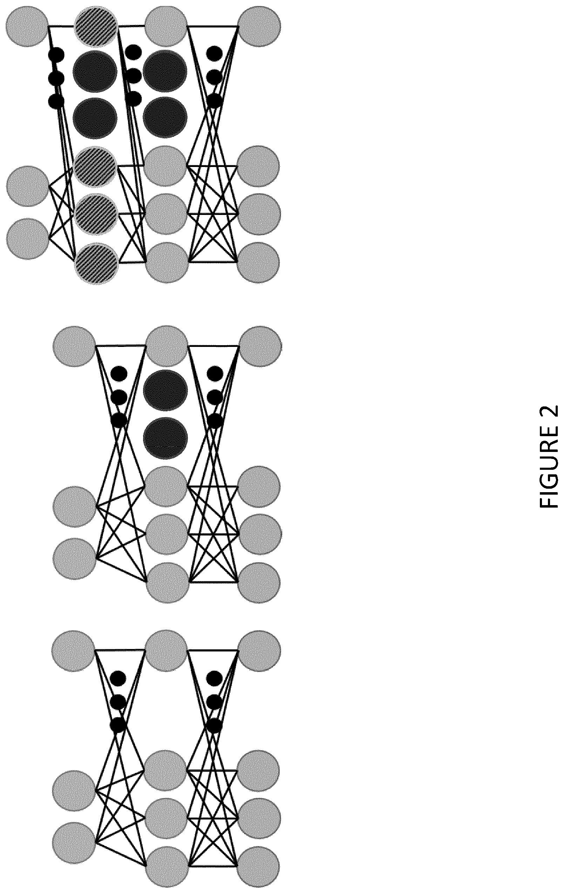

In order to reduce training time/resources, there are disclosed herein methods for training a DBN. A method for training a DBN includes expanding the DBN. **Figure** 2 is a diagram illustrating expanding a DBN. A method includes expanding the width of the DBN's network after a first training epoch (from left to middle of Figure 2). This step may comprise adding at least one neuron to at least one layer of the DBN. In Figure 2, the two dark grey neurons are added. The method includes then expanding the depth of the DBN's network (from middle to right of Figure 2). This step may comprise adding at least one layer to the DBN as shown. The new layer is shown using stripes for the neurons which correspond to neurons in the original DBN and using dark grey nodes for the neurons which correspond to the neurons added in the previous (width expansion) step. A new layer may initially have the same weights as another layer of the DBN. Methods disclosed herein further comprise using transfer learning to pass on the knowledge from the training in the first epoch to the new expanded network.

To reiterate, using a larger (more nodes) DBN may offer improved accuracy, for example when using the DBN for classification, but it comes with drawbacks in hardware requirements and time requirements. This disclosure provides methods to firstly train a network, and then expand the width followed by the depth of the network to improve capabilities and accuracy, followed by transfer learning and further training.

The use of transfer learning means that the knowledge learned from the first training step is passed to the following training steps and therefore additional time in training the expanded network or in starting from scratch is not required. That is, training the smaller network (before expansion) first requires less time/resources than using the expanded network from scratch. The knowledge gained from this initial training step (i.e. weights of nodes) is transferred to an expanded version of the network, and then training is continued. Overall, aspects disclosed herein reduce time and resource requirements and may improve (or maintain) the accuracy of DBNs.

Aspects disclosed herein may be used to train a DBN for various tasks, for example video processing, object detection in video data, estimating/predicting pollusiton levels, and classifying wellbeing based on sensor data from environmental, location, and physiological based sensors.

Transfer learning and network expansion as disclosed herein not only speed up the training process and achieve the same or improved accuracy of the model but also reduce data requirements from people. That is, less data is required to train a DBN using aspects disclosed herein compared to traditional training methods, to achieve the same accuracy. The data requirement may be more significant when the data are collected in real-time with humans and sensors moving/commuting outside, for example.

The use of DBNs is widely researched in Deep Learning applications and has a variety of applications, replacing Convolutional Neural Networks in some instances. The aspects disclosed herein may reduce training times and decrease hardware requirements, for example when using DBNs for classification tasks. Furthermore, aspects disclosed herein may decrease the amount of required data, which is particularly useful in experimental setups with human participants as data may be more difficult to obtain in those scenarios and may enhance accuracy.

Aspects disclosed herein include the use of transfer learning and network expansion. Instead of training an expanded (a large) DBN with a lot of neurons from the start, transfer learning from a previously trained simpler DBN is used. Initial training (for example using sensor data obtained from human participants in an experiment) is performed on the simpler DBN. This may be helpful in updating the model parameters and weights after the initial set of parameters and is quick (at least compared to performing such training on a larger (expanded) network) due to the lower number of neurons in the network.

The weights learned from the initial training are transferred to an expanded DBN which has undergone width and then depth expansion by adding at least one additional layer of neurons. The training is performed (continued) on the more complex (i.e. the expanded) DBN to improve accuracy but using weights learned from the previous simpler network. This may reduce the time and resources required to finalise the training phase and required for the training process in general. To understand the difference between time requirements with the conventional methodologies and the aspects disclosed herein, some time-consuming training phase tasks and how to improve them are listed below:

- Conventionally, determining the DBN structure requires repeated manual experiments. Aspects disclosed herein initialise with a simpler DBN to alleviate this problem, i.e. to reduce the time taken in this phase.

- Increased complexity of network structure provides the ability to solve more complex problems, at the expense of longer training time. Initial training on the simpler DBN lowers the training time whilst learning initial weights with some insights on the features required to solve the problem. Expanding the network and transferring the weights still enables the solution of more complex problems, with lower training times.

- A network can be expanded further if it offers improved accuracy and does not meet the stopping criterion. This means there is an automated procedure to improve accuracy and identify a good network structure, without the need of tedious manual experiments or long training times and reconfigurations.

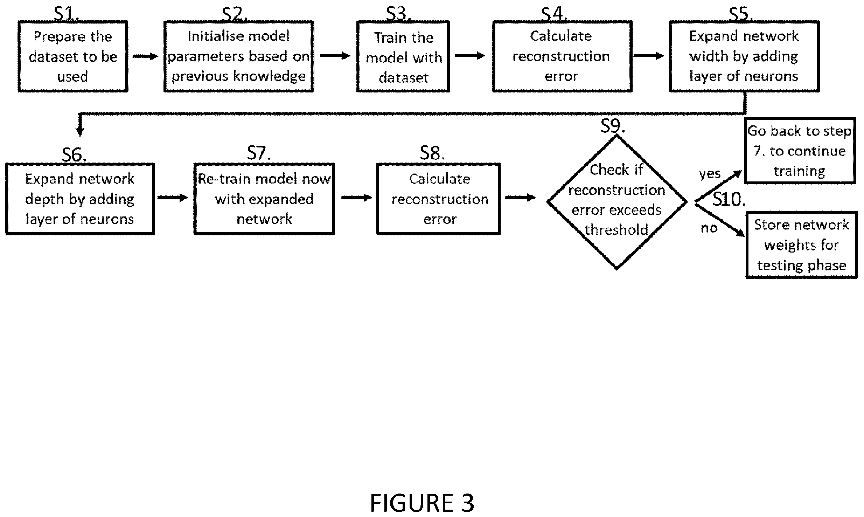

**Figure** 3 illustrates a method, briefly summarised as follows (with a more detailed description below). A dataset (e.g. obtained from sensors on human participants) is prepared for training. Model parameters may be initialised using expert knowledge to begin the training of the simpler DBN. Then the simple DBN is trained to update the weights of the neurons and obtain an initial model quickly. The reconstruction error may be calculated during the training of the simple network to provide an idea of how close/far the model is from the ground truth and to avoid overfitting by assigning a threshold value. Overfitting tends to happen when the model learns too much on the training data and does not generalise well to unseen testing data. Though it is not expected to happen in this training phase of the simple DBN due to the short duration of the training phase, the reconstruction error may still be calculated to give an insight of how the model has trained and give a comparison for the complex DBN's reconstruction error.

Furthermore, the complex/expanded DBN is created by expanding the simpler DBN (e.g., a copy of the simpler DBN - i.e. without weights) by adding at least one neuron to the width, followed by an expansion by adding at least one layer of neurons to the depth. This may be visualised as in Figure 2. The complex DBN uses transfer learning to obtain the weights from the simple DBN and continue its own training.

The reconstruction error may be calculated and a reconstruction error difference compared against a stopping criterion. The threshold (stopping criterion) can be decided by expert knowledge and/or repeated testing.

A benefit of this method is that the initial training is much faster with a simpler network and then the next stage can provide a higher accuracy than the previous proposed methods in literature. This may be useful particularly in experiments where data acquisition from human participants is difficult and scarce, and accuracy plays a crucial role in identifying behaviours.

To sum up, this method includes initial training using a simple DBN (whose size is for example predetermined), expansion by width and depth to obtain a more complex structure without sacrificing training time, transfer of weights learned before expansion to the expanded DBN to keep knowledge from the first training step, and training of the more complex DBN. The method provides more capability (compared to using a simple DBN only) and faster training times and/or lower-spec resources. In contrast, without expanding the network, a simple DBN may not be able to model complex problems accurately, thus output layers may provide bad results, and using an expanded network from the start may lead to immediate bottleneck due to for example the range of input data and greedy learning followed by Gibbs sampling training phase.

The method illustrated in Figure 3 will now be described in more detail.

Step S1: Pre-process the dataset. This step may comprise following standardisation procedures on e.g. sensor data, for example including removing noise and inappropriate data, and normalisation in range [0,1]. To normalise the data the following formula may be used,

$$z_i = \frac{x_i - \min(x)}{\max(x) - \min(x)}$$

where $z_i$ is the normalised datapoint, $x_i$ represents a datapoint from the dataset and min(x)/max(x) represent the minimum and maximum respectively.

Step 2: Initialise model parameters for DBN structure. A simple structure with depth and width of 4 including visible, hidden and output layer may be used, for example. Initial weights and biases, learning rate, and number of epochs for the simple, initial training may also be set. In an example in which various sensor data from a human experiment is used, a batch of 20 data per epoch may be used to reduce computational requirements.

In an example, the initial weights may be initialised using N(0,0.1) normal distribution random numbers, similarly to the biases, the learning rate may be set to 0.01, and number of iterations (epochs) for the initial, simple training to 2. This may enable the simple DBN structure to learn the basic features quickly before expanding.

Step 3: Initial training with simple DBN structure. To complete the initial training in each RBM the commonly used Contrastive Divergence (CD) Gradient Approximation algorithm may be used. This may be used to calculate and update the network parameters, weights and biases, from bottom to top. The initial training on the simple structure may extract features and reduce the dimensionality of data with low computational costs before transferring the learning to a more complex structure.

Step 4: At each training stage, the reconstruction error may be calculated to identify the difference between the input value and the reconstructed value. The reconstruction error can be calculated as follows:

$$R_{error} = \frac{\sum_i^k \sum_j^l abs(x_{ij} - \hat{x}_{ij})}{k * l}$$

where k is number of samples, $l$ is number of features, $x_{ij}$ is the original input, $\hat{x}_{ij}$ is the reconstructed input and abs() indicates the absolute value.

A stopping criterion can also be included in order to prevent overfitting. This is unlikely to occur whilst training the simple structure but will be beneficial in the complex training phase. If the stopping criterion is reached then the training and expanding of the network may stop and the method may proceed to testing phase. Stopping criterion $\ell$ may be used as follows:

$$abs(R_{error}^k - R_{error}^{k+1}) < \ell$$

where $\ell$ may be a user defined value, for example 0.02.

Step 5: Proceed to generate/provide the complex DBN by expanding the width. This is illustrated as the first expansion step in Figure 2. The initial simple structure consists of a width of 4 and the expanded structure (middle of Figure 2) consists of a width of 6 neurons. The weights of the simple DBN are transferred to the complex DBN. Due to the increased size of the complex structure there will be some neurons in the complex structure without weights having been transferred thereto. To assign weights to those (additional) neurons the weights can be sampled from the simple DBN after training the simple DBN. That is, the following method can be used for assigning weights in the complex DBN:

$$W_i = \begin{cases} W_i', & , i \le n \\ sampling\ from\ (W'_1, ..., W'_n), & i > n \end{cases}$$

where $W_i$ indicates the weight for each neuron in the complex DBN, $W_i'$ indicates the weight for each neuron in the simple DBN, and n is the number of neurons in the simple structure.

Therefore, for the newly added neurons in the complex DBN the weights may be drawn from the previously learned weights, for example randomly. Though not shown in the above formula, some of the weights from the simple structure may be divided by a replication factor before being assigned to the complex DBN to adjust the weight in the network. This is to avoid having many copies of the same weight. For example, if by randomly sampling from the weights from the simple structure the same weight is sampled six times in a row then this replication factor which will change the weight a bit by division in order to avoid all those weights being exactly the same. If, for example six different weights are sampled, then the replication factor does not come into play. The replication factor is a very small number, just so it changes the weights a bit if the rare scenario occurs to avoid having the same weight multiple times (especially, for example, when assigning weights to neurons which expand the depth), as having the same weight multiple times may mean that less features are being learned.

Step 6: Proceed to add to the complex DBN structure by expanding the depth. This is illustrated in the second step of Figure 2 which adds further neurons in the depth. The added width allows for learning of more features and the added depth introduces the ability to learn more complex, non-linear features. The weights for the new neurons will be similarly calculated as mentioned in Step 5 (i.e. random sampling). The depth expansion may limit the usage of activation functions to the linear rectification activation function (ReLU), as sigmoid and tanh functions may invalidate some criteria - this limitation may provide a more robust activation function.

Step 7: Train expanded DBN. This may be considered as repeating step 3 but with the expanded DBN rather than the simple DBN.

Step 8: Calculate reconstruction error. The reconstruction error may be calculated as described with reference to step 4.

Step 9: Evaluate the stopping criterion. The difference between the reconstruction error after a training epoch and the reconstruction error of the previous training epoch may be compared against a threshold (the stopping criterion).

Step 10: If the difference exceeds (or is equal to) the threshold then the method may return to step 7. If the difference is less than the threshold then the next step is to store the network weights for the testing phase - i.e. to end the training.

Any of Steps 1, 2, and 4 may not be part of the method. Steps 8-10 may not be part of the method. A different way of determining when to end training may be used instead of steps 8-10.

The simple DBN may be referred to as a first DBN and the complex DBN may be referred to as a second DBN. The complex DBN may be generated by expanding the width and depth of (a copy of) the simple DBN and the weight assignment/knowledge transfer may be performed after the expansion.

The expansion comprises adding at least one neuron to the simple DBN. The expansion may comprise adding to the depth and then to the width. The expansion may comprise adding at least one neuron to at least one layer and/or adding at least one neuron to at least one other layer or to each other layer, and/or adding at least one layer of neurons to the DBN.

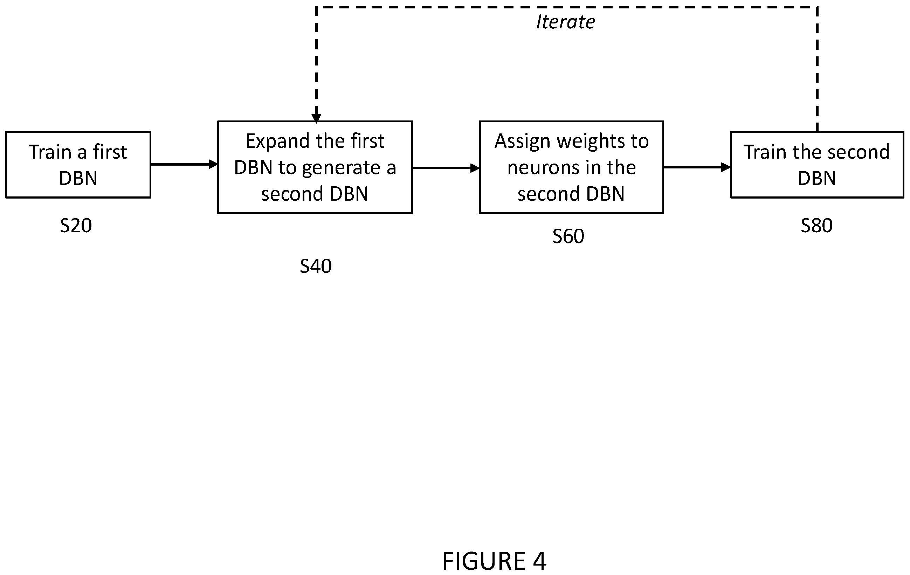

**Figure 4** is a diagram illustrating a method of training a DBN.

Step S20 comprises training a first deep belief network, DBN, using training data. This step results in a (partially) trained first DBN.

Step S40 comprises expanding the first DBN to generate a second DBN, for example by adding at least one neuron to the first DBN. Step S40 may be considered to comprise expanding a copy of the first DBN, or a copy of the first DBN without weights, or a copy of the "untrained" first DBN. Step S40 may comprise adding at least one neuron to a copy of the untrained first DBN (or a copy of the first DBN but without weights). This step results in the generation of a second DBN (which is expanded compared to the first DBN).

Step S60 comprises assigning weights to neurons in the second DBN according to weights of (corresponding) neurons in the trained first DBN. This step may be considered to result in a partially trained second DBN. The assigning of weights may be as described with reference to Figure 3.

Step S80 comprises training the (partially-trained) second DBN using the training data.

The training of the first and second DBNs may comprise using contrastive divergence as described with reference to Figure 3. Other aspects of the method illustrated in Figure 4 may be as described with reference to Figure 3.

The first DBN and/or the second DBN may be trained for predefined/particular/set numbers of epochs or for predefined/particular/set amounts of time. A reconstruction error may be computed after each training epoch (or at particular/set/predetermined time intervals, or after a particular number of training epochs) when training the first DBN and/or the second DBN, as described with reference to Figure 3. The training of the first DBN and/or of the second DBN may be ended after an epoch if an absolute difference between its reconstruction error after that epoch and its reconstruction error after the previous epoch is less than a threshold value (stopping criterion).

Step S40 may comprise adding at least one neuron to the (copy of the) (untrained) first DBN to expand the width of the network and adding at least one neuron to the (copy of the) (untrained) first DBN to expand the depth of the network. Step S40 may comprise adding at least one neuron to a layer of the (copy of the) (untrained) first DBN (to expand the width of the network) and optionally (then) adding at least one neuron to at least one other layer of the (copy of the) (untrained) first DBN (to further expand the width of the network). Step S40 may comprise adding at least one neuron to each layer of the (copy of the) (untrained) first DBN (to expand the width of the network). Step S40 may comprise adding at least one layer of neurons (to expand the depth). Computational expense may be saved by adding to the width first and then to the depth, but neurons may be added in a different order.

In one aspect, the method comprises the steps S20-S80 and the dotted *iterate* line may be ignored. In this aspect, the method may be considered to comprise a step of outputting the trained second DBN as an output DBN for further use (and the method may comprise using this output DBN as described below).

In another aspect, the steps S40-S80 may be iterated once (a second time) after step S80 is performed, as indicated by the dotted *iterate* line. The trained second DBN of the first iteration is the first DBN of the second iteration. That is, the trained second DBN may be considered to be expanded (or a copy of the second DBN without weights, or a copy of the untrained second DBN) to generate a third DBN in step S40 in the second iteration, and then neurons in the third DBN are assigned weights based on those in the trained second DBN in step S60 of the second iteration, and then the third DBN is trained in step S80 of the second iteration.

In other aspects, the method steps S40-S80, which may be referred to as an expansion-training process, are iterated a plurality of times and the first DBN of each subsequent iteration is the (trained) second DBN of the previous iteration, i.e. the iteration preceding the said subsequent iteration. That is, a DBN may be continually expanded (or a copy thereof expanded) and trained until an output DBN is generated.

The number of iterations may be fixed/set or the training-expansion process may be continually iterated until some criterion is met. For example, the training-expansion process may be continually iterated (in each case training the first/second DBN for set numbers of epochs or set amounts of time) until the stopping criterion is met as described above (for the "second DBN").

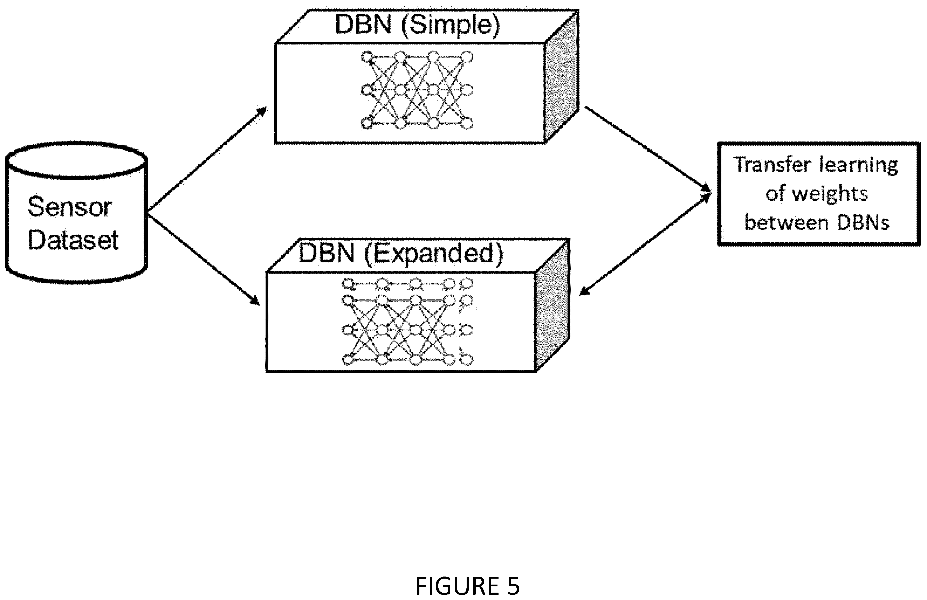

**Figure** 5 illustrates a concept of aspects disclosed herein. Training data (e.g. sensor data as shown in Figure 5) is used to train the simple/first DBN and also the expanded/complex/second DBN, and transfer learning is used to assign weights to neurons in the second DBN based on the weights in the first DBN.

Applications

Aspects disclosed herein may be used in different technical applications/fields.

For example aspects disclosed herein may be used in technological fields where DBNs are used with human participant data, e.g. in research where the human behaviour is sought to be simulated. An example application of aspects disclosed herein is in human modelling in a SDT (social digital twin) project. Aspects disclosed herein may improve, for example, the classification of human wellbeing based on environmental factors. Such applications may illustrate how decreasing $CO_2$ will improve wellbeing (for example, in a location like the Isle of Wight).

Not only does technology provide methods to simplify work related tasks; a purpose of developing and advancing technology is to provide a better tomorrow for the generations to come. Nonetheless, whilst pushing boundaries and achieving something that previous generations thought was impossible, the environmental aspect has been neglected. It may be considered to be becoming apparent that without the focus shifting to benefit the environment, a point of no return might be nearby. It is important to address the glaring issues that have arisen due to bad management of the environment and its resources, not only to benefit the environment and the future generations but also for our benefit. Exposure to particulate matter, gases, and noise can impact the behaviour and health of individuals daily. Due to development in technology, the ability to gather large amounts of data and monitor the environment is available. Furthermore, sensor-based technologies can also collect data on the individual level real-time without bothering the user. There is potential then to understand the relationship between the environment, personal characteristics, behaviour, and wellbeing, using sensing technologies and a variety of models.

Nottingham Trent University (NTU) presents a framework to quantify an individual's exposure to the environment by utilising a range of technological, mobile-sensing and digital devices (https://doi.org/10.48550/arXiv.2101.12615). They propose the use of an unsupervised one-dimensional deep belief network (DBN) to enable depth feature extraction from the fused environmental and physiological data. A DBN can be used to classify the five self-reported states of wellbeing using the pollution and physiological data. Unsupervised DBNs are beneficial as they learn to extract a deep hierarchical representation of the training data which can then be used as features within a supervised machine learning classifier. Even with the use of the dropout technique and zero-masking strategies to enhance the robustness of DBNs, there are several issues.

As previously mentioned, DBNs may be hardware expensive and time-consuming to perform classification. There is also a big data requirement which becomes more difficult when human participants will be the ones providing the data. As mentioned above, DBNs consist of a stack of restricted Boltzmann Machines (RBMs); the layers interconnect with the previous layers and usually a greedy learning algorithm is used to train top-down weights, layer by layer; and Gibbs sampling usually proposed to extract an output layer. The multiple layers to model a complex problem, alongside the various type of input data bottleneck the training phase. With these in mind, NTU's framework presented an accuracy of 80% with their best network, so there is still potential for enhancing the accuracy as well.

Aspects disclosed herein may improve the training procedure of DBN used to classify a participant's wellbeing from the environmental and physiological data collected from sensors. Aspects may be applicable in any applications with experimental data where DBNs may be used for classification tasks and may speed up the training process. This may be a great addition to the SDT project, as demonstrating care and research for people's wellbeing should also be an objective. Classifying people's wellbeing based on sensor data from environmental, location and physiological input provides insight on how those factors affect everyday life. It is very important for the SDT to understand how external factors impact people in the communities and assist in improving their wellbeing.

As mentioned above, aspects disclosed herein may used in an application in which a DBN is used to classify wellbeing based on sensor data (e.g. as proposed by NTU). In such an application human participants can provide self-reported responses but also sensor data will be collected from various sources. Examples of the data collected are as follows:

- Environmental sensor data such as air quality, noise etc
- Human sensor data such as heart rate, body temperature etc

- GPS location data from human participants
- Human self-reported responses

Further and/or more detailed examples of possible sensor data follow:

- air pollution;
- particulate matter concentration;
- PM1; PM2.5; PM 10 (particulate matter concentration types)
- oxidised gas concentration;
- reduced gas concentration;
- NH3 concentration;
- noise level (in decibels);
- people count in the vicinity (of the individual/person);
- electrodermal activity;
- heart rate;
- heart rate variability;
- body temperature;
- blood volume pulse;
- body movement (via an accelerometer).

A worked example of using aspects disclosed herein for classifying wellbeing based on environmental and/or physiological and/or geographical data is described below. Data may be collected at intervals e.g. of seconds, or at certain time periods, and for example an app can ask for the human participant to provide a response (reported wellbeing). The sensor data usually have a higher frequency of collection (than self-reported data) and give an insight to the surrounding conditions. The standardisation procedures are completed accordingly to all the data obtained.

Model parameters are initialised for the DBN structure. The configuration previously described with reference to Figure 3 may be used for example in order to reduce computational resources and time taken to train the initial simple structure. The CD algorithm is used to train the simple structure for 2 epochs to obtain basic knowledge and features. The reconstruction error is calculated to identify the difference between the input and reconstructed value - due to the limited training, in this particular example the stopping criterion was not reached.

The network (DBN) is expanded firstly by width and then by depth and weights are transferred from the simple structure as previously described (with reference to Figure 3/4). The expansion enables the network to identify richer and more complex features in order to improve the robustness and accuracy of the DBN, but doing so without the expensive resources and/or time required for training a complex structure from the start. The transferred learning from the simple structure to the complex assists in reducing the time taken to initially train the network. The network continues to train until the stopping criterion is reached.

The testing phase aims to identify performance increase gained from using aspects disclosed herein whilst also examining the accuracy of using sensors to classify human's responses. Therefore, in general aspects disclosed herein have the ability to improve training times and accuracy on DBN network structures, for example which aim to relate human responses to sensor data. This is important in such settings as acquiring such data is difficult and happens only in experimental phases due to the required human self-reported responses.

Training the second/first DBN may comprise training the second/first DBN to classify a wellbeing state based on the training data (which may be the sensor data as defined above) according to a self-reported wellbeing state as ground truth data.

Aspects disclosed herein may be applied in other fields.

In an example, the trained second DBN (the output DBN) is for video processing, more specifically for object detection/tracking in videos/video data. In an example the trained second DBN (the output DBN) is configured to receive as input data video data and is configured to detect/track at least one object in the video data. In this example the training data is video data. In an example, methods comprise using the trained second DBN (the output DBN) for video processing, in particular to detect/track at least one object in a video/video data.

In an example, the trained second DBN (the output DBN) is for quantifying an individual's/person's exposure to the/their environment, e.g. based on sensor data as defined above. In an example, methods comprise using the second/output DBN to quantify an individual's exposure to the environment in this way.

In an example, the trained second DBN (the output DBN) is for estimating/predicting pollution levels in an environment based on data from sensors (data as defined above). In an example, methods comprise using the second/output DBN to estimate/predict pollution levels in this way.

Methods (any method aspects described herein) may be implemented on heterogeneous hardware with a plurality of processors operating in parallel. Methods may comprise training the first DBN on/using a first processor and training the second DBN on/using a second processor. The second processor may be larger and/or have more RAM/memory and/or be more powerful than the first processor.

Methods may be implemented on/using a series of processors and may comprise, on/for each successive iteration, using a larger processor from the series of processors than the processor used in/for the previous iteration. A method may comprise training a plurality of DBNs each using any methods described herein on/using the series of processors, and start times of the training (expansion-training process) for each DBN to be trained may be staggered so that the processors of the series of processors operate in parallel.

The first and second DBNs may be referred to as primary first and second DBNs, and methods may comprise training another DBN, i.e. a secondary DBN, according to any methods described herein. Methods may comprise training the primary first DBN on/using a first processor and simultaneously training a secondary second DBN on/using a second processor. Methods may comprise training the primary second DBN on/using the second processor and simultaneously training a secondary first DBN on/using the first processor. The second processor may be larger and/or have more RAM/memory and/or be more powerful than the first processor. The training (the expansion-training process) of the different or "primary and secondary" DBNs may use different training data.

Aspects disclosed herein provide for transfer learning and network expansion for deep belief networks enabling increased accuracy and less resources/time required. This may be beneficial, especially in experiments where human participants are necessary for data acquisition as it is time and resource expensive to do them. Leveraging learning done in a previous, simpler iteration can reduce the time required to train the network without compromising accuracy. Accuracy is expected to improve due to the network expansion. The combination of expanding the network and transferring learned weights from a simple DBN to a complex one will reduce the training time but also improve accuracy of models.

Aspects disclosed herein relate to using transfer learning and network expansion to improve performance and reduce resource requirements for the use of deep belief networks, for example in human participant experiments. Knowledge can be transferred between a trained, simple network and a new expanded one before continuing training.

The term "weight of a neuron" as used herein may for example refer to the bias(es) of the neuron and/or the weight of the connections between the neuron and any other neuron. The term "neuron" as used herein may for example refer to an RBM, and "node" may be used in place of "neuron".

Method aspects (in particular the training-expansion or expansion-training process) may comprise storing the weights of the neurons and then adding at least one neuron to a network, and then sampling from the stored weights. When assigning weights to neurons on the second DBN, some of the neurons may already have weights based on the first DBN weights, and it is the newly added neuron(s) that need(s) to have weight(s) assigned thereto.

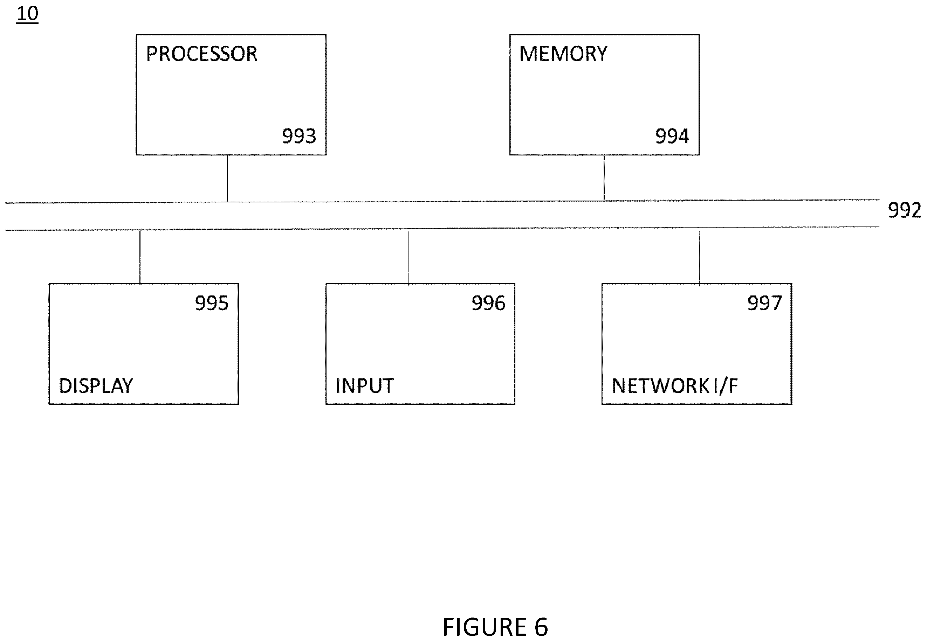

**Figure 6** is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S1-S10 and/or S20-S80.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S1-S10 and/or S20-S80. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store weights and/or networks (DBNs) and/or network representations and/or parameters and/or thresholds and/or stopping criteria and/or computed values and/or video data and/or sensor data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The processor 993 may be one of a plurality of processors (not shown) configured to execute method steps/program instructions. The processor 993 may comprise a plurality of processors. In either case, the processors may be different sizes and/or have different performance specifications/RAM/processing capabilities. The processors together may be referred to as heterogeneous parallel computing hardware. The processors may execute method steps in parallel as described above. For example, one such processor (or set of processors) may train a DBN whilst another processor (or set of processors) trains another DBN. The plurality of processors may be a series of processors of increasing sizes and/or performance specifications/RAM/processing capabilities and multiple DBNs may be trained in parallel as described above.

The display unit 995 may display a representation of data stored by the computing device, such as a representation of DBNs or the results of using a DBN for object detection/tracking or wellbeing classification or pollution level prediction/estimation, and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input (parameters, data, etc.).

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 6. Such a computing device need not have every component illustrated in Figure 6, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. The features of implementing methods on a plurality of processors may apply to implementing methods on a plurality of computing devices - i.e. each processor (or set of processors) may be implemented in a separate computing device, and the heterogeneous hardware may comprise a plurality of computing devices. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

Any DBNs may be stored/represented in the form of linked data nodes, for example on at least one memory.

The above-described embodiments of the present invention may advantageously be used independently of any other of the embodiments or in any feasible combination with one or more others of the embodiments.

Aspects disclosed herein provide for transfer learning and network expansion for deep belief networks enabling increased accuracy and less resources/time required. This may be beneficial, especially in experiments where human participants are necessary for data acquisition as it is time and resource expensive to do them. Leveraging learning done in a previous, simpler iteration can reduce the time required to train the network without compromising accuracy. Accuracy is expected to improve due to the network expansion. The combination of expanding the network and transferring learned weights from a simple DBN to a complex one will reduce the training time but also improve accuracy of models.

Aspects disclosed herein relate to using transfer learning and network expansion to improve performance and reduce resource requirements for the use of deep belief networks, for example in human participant experiments. Knowledge can be transferred between a trained, simple network and a new expanded one before continuing training.

## Claims

1. A computer-implemented method comprising:

   training a first deep belief network, DBN, using training data;
   adding at least one neuron to the first DBN to generate a second DBN;
   assigning weights to neurons in the second DBN according to weights of neurons in the trained first DBN; and
   training the second DBN using the training data.

2. The computer-implemented method as claimed in claim 1, wherein the training of the first DBN comprises training the first DBN for a predefined number of epochs or for a predefined amount of time.

3. The computer-implemented method as claimed in claim 1 or claim 2, wherein assigning weights to the neurons in the second DBN according to the weights of neurons in the trained first DBN comprises, for the newly added neurons in the second DBN, assigning to each neuron the weight of a neuron sampled from the trained first DBN.

4. The computer-implemented method as claimed in any of the preceding claims, wherein the training of the second DBN comprises training the second DBN for a predefined number of epochs or for a predefined amount of time.

5. The computer-implemented method as claimed in any of the preceding claims, further comprising computing a reconstruction error after a number of training epochs when training the second DBN or at a time interval when training the second DBN.

6. The computer-implemented method as claimed in claim 5, further comprising ending the training of the second DBN after an epoch if an absolute difference between successive reconstruction errors is less than a threshold value.

7. The computer-implemented method as claimed in any of the preceding claims, further comprising:

   adding at least one neuron to the second DBN to generate a third DBN;
   assigning weights to neurons in the third DBN according to weights of neurons in the trained second DBN; and
   training the third DBN using the training data.

8. The computer-implemented method as claimed in any of claims 1-6, further comprising iterating the adding of at least one neuron to the first DBN, the assigning of weights to neurons in the second DBN, and the training of the second DBN, wherein the first DBN of each iteration is the second DBN of the previous iteration.

9. The computer-implemented method as claimed in any of the preceding claims, wherein the trained second DBN is for classifying a wellbeing state of an individual based on sensor data including any of:

   air pollution;
   particulate matter concentration;
   oxidised gas concentration;
   reduced gas concentration;
   NH3 concentration;
   noise level;
   people count in the vicinity;
   electrodermal activity;
   heart rate;
   heart rate variability;
   body temperature;
   blood volume pulse; and
   body movement.

10. The computer-implemented method as claimed in any of claims 1-8, wherein the trained second DBN is for object detection or tracking in video data.

11. The computer-implemented method as claimed in any of claims 1-9, wherein training the first and second DBNs comprises training the first and second DBNs to classify a wellbeing state based on the training data according to a self-reported wellbeing state as ground truth data.

12. The computer-implemented method as claimed in any of the preceding claims, wherein the method is implemented on heterogeneous hardware with a plurality of processors operating in parallel.

13. A computer program which, when run on a computer, causes the computer to carry out a method comprising:

   training a first deep belief network, DBN, using training data;
   adding at least one neuron to the first DBN to generate a second DBN;
   assigning weights to neurons in the second DBN according to weights of neurons in the trained first DBN; and
   training the second DBN using the training data.

14. An information processing apparatus comprising a memory and at least one processor connected to the memory, wherein the at least one processor is configured to:

   train a first deep belief network, DBN, using training data;
   add at least one neuron to the first DBN to generate a second DBN;
   assign weights to neurons in the second DBN according to weights of neurons in the trained first DBN; and
   train the second DBN using the training data.

15. The information processing apparatus as claimed in claim 14, wherein the apparatus comprises heterogeneous hardware with a plurality of processors operating in parallel.

FIGURE 1

FIGURE 2

FIGURE 3

FIGURE 4

Transfer learning of weights between DBNs

DBN (Simple)

DBN (Expanded)

Sensor Dataset

FIGURE 5

FIGURE 6

EP 4 425 384 A1

Europäisches Patentamt
European Patent Office
Office européen des brevets

# EUROPEAN SEARCH REPORT

Application Number

EP 23 15 9239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383131 A1 (BAKER JAMES K [US]) 1 December 2022 (2022-12-01) * paragraphs [0079], [0130], [0171] – [0173], [0460], [0510] – [0519], [0614] – [0618], [0662] * | 1-15 | INV. G06N3/082 G06N3/045 G06N3/047 G06N3/0475 G06N3/088 |
| X | AU 2020 368 222 A1 (IBM [US]) 31 March 2022 (2022-03-31) * paragraphs [0023], [0058] – [0062], [0069] * | 1,12-15 | |

TECHNICAL FIELDS SEARCHED (IPC)

G06N

The present search report has been drawn up for all claims

| Place of search | Date of completion of the search | Examiner |
|---|---|---|
| The Hague | 18 August 2023 | Bykowski, Artur |

# EP 4 425 384 A1

## ANNEX TO THE EUROPEAN SEARCH REPORT
## ON EUROPEAN PATENT APPLICATION NO.

EP 23 15 9239

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2023

| Patent document cited in search report | | Publication date | Patent family member(s) | | Publication date |
|---|---|---|---|---|---|
| US 2022383131 | A1 | 01-12-2022 | CN | 111226232 A | 02-06-2020 |
| | | | CN | 111226236 A | 02-06-2020 |
| | | | CN | 111542843 A | 14-08-2020 |
| | | | EP | 3688676 A1 | 05-08-2020 |
| | | | EP | 3688677 A1 | 05-08-2020 |
| | | | EP | 3688678 A1 | 05-08-2020 |
| | | | US | 2019095798 A1 | 28-03-2019 |
| | | | US | 2020210842 A1 | 02-07-2020 |
| | | | US | 2020265320 A1 | 20-08-2020 |
| | | | US | 2020279165 A1 | 03-09-2020 |
| | | | US | 2020279188 A1 | 03-09-2020 |
| | | | US | 2020285939 A1 | 10-09-2020 |
| | | | US | 2020285948 A1 | 10-09-2020 |
| | | | US | 2020320371 A1 | 08-10-2020 |
| | | | US | 2022335305 A1 | 20-10-2022 |
| | | | US | 2022383131 A1 | 01-12-2022 |
| | | | WO | 2019067236 A1 | 04-04-2019 |
| | | | WO | 2019067248 A1 | 04-04-2019 |
| | | | WO | 2019067281 A1 | 04-04-2019 |
| AU 2020368222 | A1 | 31-03-2022 | AU | 2020368222 A1 | 31-03-2022 |
| | | | CN | 114503108 A | 13-05-2022 |
| | | | GB | 2604791 A | 14-09-2022 |
| | | | JP | 2022552243 A | 15-12-2022 |
| | | | KR | 20220054812 A | 03-05-2022 |
| | | | US | 2021110045 A1 | 15-04-2021 |
| | | | WO | 2021074770 A1 | 22-04-2021 |

EPO FORM P0459

For more details about this annex : see Official Journal of the European Patent Office, No. 12/82